# EUROPÄISCHE PATENTSCHRIFT

(11) **EP 4 291 480 B1**
(45) Veröffentlichungstag und Bekanntmachung des Hinweises auf die Patenterteilung: **04.03.2026**
(21) Anmeldenummer: 21819336.5
(22) Anmeldetag: 24.11.2021
(51) Int. Cl.: B62M 6/65, B62M 19/00, B62M 6/55

(54) **ANTRIEBSANORDNUNG MIT EXZENTERGETRIEBE FÜR EIN MUSKELBETRIEBENES FAHRZEUG SOWIE FAHRZEUG MIT DER ANTRIEBSANORDNUNG**
DRIVE ASSEMBLY COMPRISING AN ECCENTRIC GEARBOX FOR A HUMAN-POWERED VEHICLE, AND VEHICLE COMPRISING SAID DRIVE ASSEMBLY
ENSEMBLE D'ENTRAÎNEMENT COMPRENANT UNE BOÎTE DE VITESSES À EXCENTRIQUE POUR UN VÉHICULE À PROPULSION HUMAINE, ET VÉHICULE COMPRENANT LEDIT ENSEMBLE D'ENTRAÎNEMENT

(30) Priorität: 09.02.2021 DE 102021102989
(43) Veröffentlichungstag der Anmeldung: 20.12.2023
(73) Patentinhaber: Schaeffler Technologies AG & Co. KG, 91074 Herzogenaurach (DE)
(72) Erfinder: GREB, Peter, 77833 Ottersweier (DE); MAN, Laszlo, 77833 Ottersweier (DE)
(74) Vertreter: Schaeffler Technologies
(86) Internationale Anmeldenummer: PCT/DE2021/100927
(87) Internationale Veröffentlichungsnummer: WO 2022/171223

(56) Entgegenhaltungen:
- DE-A1- 2 835 973
- US-A1- 2011 180 341

## Beschreibung

Die Erfindung betrifft eine Antriebsanordnung für ein muskelbetriebenes Fahrzeug mit den Merkmalen des Oberbegriffs des Anspruchs 1. Ferner betrifft die Erfindung ein Fahrzeug mit der Antriebsanordnung.

Es sind elektrische Fahrräder bekannt, welche ohne eine physikalische Antriebsverbindung zwischen Tretkurbel und Hinterrad angetrieben werden können. Der Fahrer treibt dabei mit den Tretkurbeln einen Generator zur Stromerzeugung an, um einen mit dem Hinterrad verbundenen Antriebsmotor mit Strom zu versorgen. Bei einem derartigen Antriebssystem kann somit die physikalische Antriebsverbindung, wie z.B. Kette, Zahnriemen, Kardanwelle etc. entfallen. Um die Drehzahl der Kurbelwelle zu erhöhen und das Drehmoment entsprechend zu reduzieren, kommen üblicherweise konventionelle Getriebetypen, wie z.B. ein- oder mehrstufige Planetengetriebe, Wolfromsatz etc., zum Einsatz, um einen Generator mit wenig Drehmoment und entsprechend kleiner Baugröße einsetzten zu können.

Die Druckschrift DE 59709997 D1 offenbart ein mit Muskelkraft betreibbares Fahrzeug, insbesondere Fahrrad. Das Fahrrad weist einen Generator, der zur Stromerzeugung durch einen Fahrzeugbenutzer antreibbar ist, und mindestens einen Elektromotor zum Antreiben des Fahrzeugs, der mit dem Generator zur Übertragung elektrischer Leistung verbunden ist, auf. Insbesondere ist zwischen einer Tretkurbel für das Antreiben des Generators und dem Generator ein Übersetzungsgetriebe in größere Drehzahl vorgesehen ist, wobei das Getriebe ein Planetengetriebe ist, das vorzugsweise mindestens zum Teil im Inneren des Generators untergebracht ist.

US 2011/180341 A1 offenbart die Merkmale des Oberbegriffes des Anspruchs 1.

Der Erfindung liegt die Aufgabe zugrunde, eine Antriebsanordnung für ein muskelbetriebenes Fahrzeug vorzuschlagen, welche kompakt ist und sich durch einen verbesserten Wirkungsgrad auszeichnet.

Diese Aufgabe wird durch eine Antriebsanordnung mit den Merkmalen des Anspruchs 1 sowie einem Fahrzeug mit den Merkmalen des Anspruchs 7 gelöst. Bevorzugte oder vorteilhafte Ausführungsformen der Erfindung ergeben sich aus den Unteransprüchen, der nachfolgenden Beschreibung und/oder den beigefügten Figuren.

Gegenstand der Erfindung ist eine Antriebsanordnung, welche für ein muskelbetriebenes Fahrzeug ausgebildet und/oder geeignet ist. Insbesondere ist das Fahrzeug als ein elektrisches Fahrrad, auch als E-Bike bekannt, ausgebildet. Grundsätzlich kann das Fahrrad genau zwei Räder aufweisen. Alternativ kann das Fahrzeug jedoch auch mehr als zwei, insbesondere drei oder genau vier Räder aufweisen.

Die Antriebsanordnung ist mit einem Antriebsmodul koppelbar, alternativ bildet das Antriebsmodul eine Komponente der Antriebsanordnung. Das Antriebsmodul dient zur Erzeugung eines elektrischen Antriebsmoments. Das Antriebsmodul umfasst vorzugsweise mindestens einen Elektromotor, welcher elektrische Energie in ein elektrisches Antriebsmoment wandelt. Dabei ist das Antriebsmodul, insbesondere der Elektromotor, mit mindestens oder genau einem Antriebsrad des Fahrzeugs antriebstechnisch verbindbar und/oder verbunden. Prinzipiell ist das Antriebsmodul als ein Radnabenantrieb ausgebildet, welcher in das Antriebsrad des Fahrzeugs integriert ist. Alternativ kann das Antriebsmodul jedoch auch außerhalb des Antriebsrades angeordnet und/oder als zentraler Antriebsmotor für ein oder mehrere Antriebsräder dienen. Grundsätzlich ist das Antriebsrad als ein Hinterrad des Fahrzeugs ausgebildet. Alternativ kann das Antriebsrad jedoch auch als ein Vorderrad des Fahrzeugs ausgebildet sein.

Die Antriebsanordnung weist ein Generatormodul auf, welches zur Erzeugung elektrischer Energie für den Elektromotor ausgebildet und/oder geeignet ist. Das Generatormodul ist insbesondere separat zu dem Antriebsmodul ausgebildet. Das Generatormodul weist hierzu einen Generator auf, der durch einen Fahrzeugbenutzer per Tretkraft antreibbar ist. Insbesondere erzeugt der Generator eine elektrische Leistung, welche aus der am Generator aufgebrachten Drehmomente und Drehzahlen resultiert. Vorzugsweise kann der Fahrzeugbenutzer die Größe der elektrischen Leistung in Abhängigkeit der Tretkraft bzw. Trittfrequenz variieren. Bevorzugt weist die Antriebsanordnung eine Steuerungseinrichtung auf, welche ausgebildet ist, das Antriebsmoment und/oder eine Antriebsdrehzahl des Antriebsmoduls in Abhängigkeit der Tretkraft und/oder Trittfrequenz zu steuern. Besonders bevorzugt ist der Generator nicht zur Umsetzung eines Betriebs als Antriebsmotor ausgebildet und/oder kann ausschließlich in einem Generatorbetrieb laufen. Alternativ kann der Generator elektromotorisch betrieben werden, um z.B. die Kurbeln in eine bestimmte Position zu bringen.

Das Generatormodul weist eine Tretkurbelwelle auf, welche zur Übertragung der Tretkraft auf den Generator ausgebildet und/oder geeignet ist. Insbesondere sind an der Tretkurbelwelle endseitig jeweils eine Tretkurbel angeordnet, über welche die Tretkraft in die Tretkurbelwelle eingeleitet wird. Insbesondere ist die Tretkurbelwelle drehbar in dem Generatormodul gelagert. Bevorzugt definiert die Tretkurbelwelle mit ihrer Rotationsachse eine Hauptdrehachse des Generatormoduls. Die Tretkurbelwelle verläuft durchgängig von einer Tretkurbel zu der anderen Tretkurbel.

Das Generatormodul weist eine Getriebeeinrichtung auf, welche zur Übersetzung der Tretkraft auf den Generator ausgebildet und/oder geeignet ist. Die Tretkurbelwelle ist dabei über die Getriebebeinrichtung getriebetechnisch mit dem Generator verbunden. Insbesondere dient die Getriebeeinrichtung zur Übersetzung ins Schnelle (Betrag (i) < 1), wobei die Drehzahl am Generator vergrößert und das übertragene Drehmoment auf den Generator verkleinert wird.

Im Rahmen der Erfindung wird vorgeschlagen, dass die Getriebeeinrichtung als ein Exzentergetriebe ausgebildet ist. Insbesondere weist das Exzentergetriebe einen Getriebeeingang, insbesondere ein Eingangsorgan, und einen Getriebeausgang, insbesondere ein Ausgangsorgan, auf, wobei die Tretkurbelwelle eingangsseitig und der Generator ausgangsseitig angeordnet ist. Insbesondere verläuft ein Kraftübertragungsweg zur Übertragung der Tretkraft von der Tretkurbelwelle über das Exzentergetriebe zu dem Generator. Die Tretkurbelwelle ist hierzu in axialer Richtung in Bezug auf die Hauptdrehachse durch das Exzentergetriebe geführt und/oder koaxial zu dem Exzentergetriebe angeordnet.

Der Vorteil der Erfindung besteht insbesondere darin, dass durch die Verwendung eines Exzentergetriebes ein besonders geräuscharmes Getriebe mit einer kompakten Bauform vorgeschlagen wird. Somit kann ein Generatormodul realisiert, welches sich durch einen geringen Bauraum auszeichnet. Im Gegensatz zu anwendungsspezifisch ausgelegten Planetengetriebestufen entfallen entsprechende Entwicklungsaufwände, wie Zeit, Kosten, Risiko etc. Weiterhin erlauben Exzentergetriebe im Zentrum eine durchgehende Welle, was für den Einsatz im Fahrrad mit beidseitig angeordneten Tretkurbeln eine Grundvoraussetzung darstellt.

Bei einer Realisierung der Erfindung weist das Exzentergetriebe einen Rollenträger mit Mitnehmerrollen als ein erstes Organ auf. Der Rollenträger ist besonders bevorzugt als eine Rollenscheibe ausgebildet. Die Mitnehmerrollen sind auf einem gemeinsamen Teilkreis um die Hauptachse regelmäßig in Umlaufrichtung verteilt. Die Mitnehmerrollen erstrecken sich in einer axialen Richtung und/oder parallel zu der Hauptachse. Ferner weist das Exzentergetriebe mindestens eine Kurvenscheibe auf. Die Kurvenscheibe weist Mitnehmeröffnungen für die Mitnehmerrollen und eine mittige Exzenteraufnahmeöffnung auf. Der freie Durchmesser der Mitnehmeröffnungen ist größer ausgebildet als der Durchmesser der Mitnehmerrollen. Insbesondere ist die Kurvenscheibe als eine flache Scheibe ausgebildet. An dem Außenumfang weist die Kurvenscheibe eine Kurvenform auf. Das Exzentergetriebe weist einen Hohlradabschnitt als ein zweites Organ auf. Der Hohlradabschnitt kann einteilig oder mehrteilig ausgebildet sein. Die mindestens eine Kurvenscheibe läuft im Betrieb mit ihrem Außenumfang auf dem Hohlradabschnitt ab. Das Exzentergetriebe weist eine Exzenterwelle als Ausgangsorgan auf. Die Exzenterwelle weist mindestens einen Exzenterabschnitt auf, wobei der Exzenterabschnitt einen kreisrunden Querschnitt aufweist. Der Exzenterabschnitt greift in die mittige Exzenteraufnahmeöffnung ein. Vorzugsweise ist zwischen dem Exzenterabschnitt und der Exzenteraufnahmeöffnung eine Scheibenlagereinrichtung angeordnet, um die Reibung zu verkleinern.

Die Kurvenform der mindestens einen Kurvenscheibe sowie die Innenkontur des Hohlradabschnitts können prinzipiell beliebig ausgebildet sein, solange diese die Funktion des Exzentergetriebes übernehmen können. Besonders bevorzugt ist das Exzentergetriebe jedoch als ein Zykloidengetriebe ausgebildet, wobei durch den Außenumfang der mindestens einen Kurvenscheibe eine Zykloidenform dargestellt ist.

In einer weiteren Konkretisierung ist vorgesehen, dass das Generatormodul einen Stator und einen Rotor aufweist, wobei die Exzenterwelle drehfest mit dem Rotor verbunden. In einem Fahrbetrieb wird somit das Tretmoment über das Exzentergetriebe auf den Rotor übertragen, sodass der Rotor relativ zu dem Stator um die Hauptdrehachse rotiert wird. Insbesondere ist die Exzenterwelle formschlüssig und/oder kraftschlüssig und/oder stoffschlüssig mit dem Rotor, vorzugsweise zumindest drehfest, verbunden. Alternativ können die Exzenterwelle und der Rotor auch aus einem gemeinsamen Materialabschnitt gebildet sein. Bevorzugt ist die Exzenterwelle in Bezug auf die Hauptdrehachse koaxial und/oder konzentrisch zu dem Rotor angeordnet. Es wird somit ein Generatormodul vorgeschlagen, welches sich durch eine besonders kompakte Bauform auszeichnet.

In einer weiteren konkreten Realisierung ist vorgesehen, dass die Exzenterwelle einen Hohlwellenabschnitt zur Durchführung der Tretkurbelwelle aufweist, wobei die Tretkurbelwelle an einem Innenumfang des Hohlwellenabschnitts drehbar gelagert ist. Insbesondere weist der Hohlwellenabschnitt an seinem Innenumfang mindestens einen Lagersitz für eine Lagereinrichtung, vorzugsweise ein Wälzlager, auf, über welche die Tretkurbelwelle drehbar an dem Hohlwellenabschnitt abgestützt ist. Bevorzugt ist der Rotor an einem Außenumfang des Hohlwellenabschnitts drehfest montiert.

In einer bevorzugten Realisierung ist vorgesehen, dass das Exzentergetriebe ein Übersetzungsverhältnis zwischen Getriebeeingang und Getriebeausgang mit einem Betrag von weniger als 1:30 aufweist. Vorzugsweise weist das Exzentergetriebe ein Übersetzungsverhältnis zwischen 1:30 und 1:100 auf. Vorzugsweise weist das Exzentergetriebe ein Übersetzungsverhältnis von 1:50 auf. Auf diese Weise wird das durch den Fahrer erzeugte hohe Tretmoment (im Bereich bis ca. 200Nm) am Getriebeeingang mit geringen Drehzahlen (im Bereich 30 bis 120 1/min) in ein geringeres Drehmoment mit hohen Drehzahlen am Getriebeausgang gewandelt.

Prinzipiell können die Mitnehmerrollen starr auf dem Rollenträger angeordnet sein. Es ist jedoch bevorzugt, dass die Mitnehmerrollen jeweils einen Bolzen, eine Rollenlagerung und eine Rollenhülse zur Übertragung des Drehmoments auf den oder die Kurvenscheiben aufweisen. Vorzugsweise ist die Rollenhülse als ein Spanlosteil und/oder Umformteil ausgebildet. Die Bolzen sind auf dem Rollenträger festgelegt. Zwischen den Bolzen und den Rollenhülsen sind jeweils eine Rollenlagerung angeordnet. Prinzipiell kann es sich um eine Gleitlagerung handeln, bevorzugt ist die Rollenlagerung jedoch als eine Wälzkörperlagerung ausgebildet. Durch diese Ausgestaltung kann ein geräuscharmer Lauf mit geringen Reibungsverlusten bei dem Generatormodul erreicht werden.

Bei einer bevorzugten Realisierung der Erfindung weist das Exzentergetriebe zwei in der Scheibenebene diametral und/oder gegengleich, z.B. um 180° in Umlaufrichtung, versetzte Kurvenscheiben auf. Die Kurvenscheiben sind bevorzugt axial aneinandergrenzend angeordnet. Vorzugsweise sind die Kurvenscheiben kontaktierend zueinander angeordnet und/oder Gleiten im Betrieb aufeinander ab. Durch diese Realisierung werden Querkräfte in dem Exzentergetriebe reduziert.

In einer weiteren konkreten Umsetzung ist vorgesehen, dass das Generatormodul ein Gehäuse aufweist, welches zur Aufnahme des Generators und des Exzentergetriebes ausgebildet und/oder geeignet ist. Insbesondere sind der Generator und das Exzentergetriebe vollständig in dem Gehäuse aufgenommen. Bevorzugt ist die Tretkurbelwelle abschnittsweise durch das Gehäuse geführt, wobei die Tretkurbelwelle über mindestens eine weitere Lagereinrichtung, vorzugsweise ein Wälzlager, radial an dem Gehäuse abgestützt ist. Das Gehäuse kann mehrteilig, vorzugsweise zweiteilig ausgebildet sein. Insbesondere weist das Gehäuse einen Aufnahmeraum zur Aufnahme des Exzentergetriebes und des Generators auf, wobei das Exzentergetriebe und der Generator in axialer und/oder radialer Richtung in Bezug auf die Hauptdrehachse formschlüssig in dem Gehäuse aufgenommen sind. Bevorzugt ist der Stator fest mit dem Gehäuse verbunden.

In einer weiteren Konkretisierung ist vorgesehen, dass das Exzentergetriebe, die Tretkurbelwelle und der Generator koaxial und/oder konzentrisch in Bezug auf die Hauptdrehachs angeordnet sind. Es wird somit ein Exzentergetriebe vorgeschlagen, welcher sich durch eine geringe axiale Baubreite und zugleich einen rotationsymmetrischen Aufbau auszeichnet.

Erfindungsgemäß bildet der Rollenträger das Eingangsorgan der Getriebeeinrichtung, insbesondere des Exzentergetriebes. Insbesondere ist der Rollenträger mit der Tretkurbelwelle drehfest verbunden. In dieser Ausgestaltung ist das Generatormodul besonders kompakt zu realisieren. Damit wird das Exzentergetriebe zwar quasi "rückwärts" betrieben, dies ist jedoch möglich, da das Exzentergetriebe keine Selbsthemmung aufweist. In dieser Ausgestaltung ist der Hohlradabschnitt drehfest angeordnet. Beispielsweise ist der Hohlradabschnitt drehfest in dem Gehäuse festgelegt oder durch das Gehäuse gebildet.

Bei einer Weiterbildung der Erfindung umfasst der Hohlradabschnitt eine Mehrzahl von Bolzenabschnitten, welche axial ausgerichtet in Umlaufrichtung regelmäßig verteilt sind. Es ist vorgesehen, dass die mindestens eine Kurvenscheibe auf den Bolzenabschnitten abläuft. Besonders bevorzugt sind die Bolzenabschnitte als Zylinderstifte, im Speziellen als gehärtete Zylinderstifte ausgebildet, welche zum Beispiel in Bohrungen eines oder des Gehäuses des Generatormoduls oder alternativ in einen drehbaren Träger als Hohlradabschnitt eingesteckt werden können. Auf diese Weise kann die Funktion des Hohlradabschnitts kosten- und bauraumoptimiert umgesetzt werden.

Bei einer alternativen nicht beanspruchten Ausgestaltung bildet der Hohlradabschnitt das Eingangsorgan in die Getriebeeinrichtung. Insbesondere ist der Rollenträger starr angeordnet. Diese Ausgestaltung führt allerdings zu einer etwas größeren Bauform.

Erfindungsgemäß weist die Tretkurbelwelle einen Wellenabschnitt und einen Wellenfortsatz zur Verbindung mit der Tretkurbel auf. Der Wellenabschnitt verläuft vorzugsweise durch den Generator. Erfindungsgemäß sind auch der Wellenabschnitt und der Wellenfortsatz miteinander lösbar verbunden.

Insbesondere kann der Wellenfortsatz und der Wellenabschnitt ineinander gesteckt werden. Damit wird ein Zwischenstück zwischen dem Wellenabschnitt und der Tretkurbel in Form des Wellenfortsatzes vorgeschlagen. Auf diese Weise kann sowohl die Schnittstelle zu dem Wellenabschnitt als auch die Schnittstelle zu der Tretkurbel unabhängig voneinander und damit jeweils funktionsgerecht ausgelegt werden. Ferner werden Auslegungsspielräume für die Gestaltung des Wellenfortsatzes eröffnet, so dass dieser auch zwischen den Schnittstellen funktionsgerecht angepasst werden kann. Es ist besonders bevorzugt, dass das Eingangsorgan mit dem Wellenfortsatz einteilig ausgebildet ist. Somit wird der von der Tretkurbelwelle angetriebene Getriebeeingang einteilig mit dem betreffenden Wellenfortsatz ausgeführt. Hierdurch wird eine ansonsten weitere, erforderliche, drehmomentübertragende Verbindung zwischen dem Wellenfortsatz und dem den Getriebeeingang darstellenden Bauteil eingespart. Ferner wird dem Wellenfortsatz eine weitere Funktion zugeordnet. Beispielsweise ist der Wellenfortsatz einteilig mit dem Rollenträger oder mit dem Hohlradabschnitt ausgebildet.

Bei einer bevorzugten Weiterbildung ist ein maximaler Außendurchmesser des Wellenfortsatzes größer als ein maximaler Außendurchmesser des Wellenabschnitts in einem Bereich des Generators. Alternativ oder ergänzend ist der maximale Außendurchmesser des Wellenfortsatzes größer als ein minimaler freier Durchmesser durch den Generator ausgebildet. Dieser Weiterbildung liegt die Überlegung zugrunde, dass durch den Generator der Außendurchmesser der Tretkurbelwelle begrenzt ist. Auf der anderen Seite ist es vorteilhaft, wenn die Tretkurbel über einen größeren Durchmesser an der Tretkurbelwelle angreift. Die mindestens oder genau zweiteilige Ausgestaltung ermöglicht, den Wellenabschnitt in den Generator einzuführen und durch zu schieben und nachfolgend mit dem Wellenfortsatz zu verbinden, wobei der Wellenfortsatz einen größeren Außendurchmesser als der Wellenabschnitt zur Ankopplung der Tretkurbel aufweist.

Bei einer bevorzugten Realisierung der Erfindung sind der Wellenabschnitt und der Wellenfortsatz miteinander in Umlaufrichtung formschlüssig verbunden. Beispielsweise kann eine Steckverzahnung insbesondere mit in axialer Richtung verlaufenden Zähnen verwendet werden. Alternativ kann eine Polygon-Verbindung eingesetzt werden, insbesondere mit einem P3G-Profil (Dreieck) oder einem P4C-Profil (Viereck). Durch diese Welle-Nabe-Verbindung wird eine sichere Drehmomentübertragung gewährleistet. Bevorzugt sind der Wellenabschnitt und der Wellenfortsatz in koaxiale Richtung miteinander verschraubt. Hierbei kann besonders bevorzugt eine erste koaxiale Achsschraube zum Einsatz kommen, welche in den Wellenabschnitt eingeschraubt wird.

Bei einer bevorzugten Weiterbildung der Erfindung weist der Wellenfortsatz ein Innengewinde zur Aufnahme von einer zweiten koaxialen Achsschraube zur Befestigung der Tretkurbel auf. Insbesondere sind die erste koaxiale Achsschraube und die zweite koaxiale Achsschraube in axialer Richtung hintereinander angeordnet. Hierdurch wird eine besonders stabile Tretkurbelwelle gebildet.

Optional umfasst die Antriebsanordnung die Tretkurbel oder Tretkurbeln, wobei die Tretkurbel auf dem Wellenfortsatz aufgesteckt und mit dem Wellenfortsatz in Umlaufrichtung formschlüssig verbunden ist. Ferner umfasst die Antriebsanordnung die zweite koaxiale Achsschraube zur Befestigung der Tretkurbel, welche in das Innengewinde eingeschraubt ist. Als zweite koaxiale Achsschraube kommt bevorzugt eine Kurbelschraube, beispielsweise eine ISIS-Kurbelschraube zum Einsatz. Durch den Wellenfortsatz wird erreicht, dass ausreichend radialer Bauraum für die zweite koaxiale Achsschraube verfügbar ist.

Auf der gegenüberliegenden Seite weist die Tretkurbelwelle eine weitere Tretkurbel auf. Hier ist bevorzugt ein weiterer Wellenfortsatz vorgesehen, wobei bei einer möglichen Ausgestaltung der Wellenabschnitt mit dem weiteren Wellenfortsatz einteilig ausgebildet ist. Bei dieser Ausgestaltung kann der Wellenabschnitt mit dem einstückigen Wellenfortsatz von einer axialen Seite durch den Generator abschnittsweise durchgeschoben werden und nachfolgend mit dem separaten Wellenfortsatz verbunden werden. Vorzugsweise ist der einstückig verbundene Wellenfortsatz auf der getriebeabgewandten Seite angeordnet, so dass auf der Getriebeseite der Wellenfortsatz und das Eingangsorgan einteilig ausgeführt werden können. Damit wird es ermöglicht, dass beide Wellenfortsätze einen größeren Außendurchmesser als der Wellenabschnitt aufweisen.

Bei einer anderen möglichen Ausgestaltung ist der weiteren Wellenfortsatz mit dem Wellenabschnitt lösbar verbunden. Insbesondere ist der weiteren Wellenfortsatz baugleich oder spiegelsymmetrisch zu dem zuvor beschriebenen Wellenfortsatz ausgebildet.

In einer weiteren Ausgestaltung ist vorgesehen, dass das Generatormodul zur Bereitstellung der elektrischen Energie über eine elektrische Leitung unmittelbar mit dem Antriebsmodul verbunden ist. Insbesondere kann der Elektromotor somit direkt durch den vom Generator erzeugten Strom gespeist werden. Alternativ oder optional ergänzend ist das Generatormodul zur Bereitstellung der elektrischen Energie mittelbar über ein Energiespeichermodul mit dem Antriebsmodul verbunden. Insbesondere ist das Energiespeichermodul als ein Akkumulator ausgebildet, welcher während der Fahrt vom Generator gespeist wird und zudem von einer externen Stromquelle geladen werden kann. Insbesondere kann der Elektromotor somit durch den in dem Energiespeichermodul gespeicherten Strom gespeist werden.

Ein weiterer Gegenstand der Erfindung betrifft ein Fahrzeug mit der Antriebsanordnung wie diese bereits zuvor beschrieben wurde. Insbesondere ist das Fahrzeug ein muskelbetriebenes Fahrzeug, insbesondere Fahrrad, ausgebildet, welches durch einen Elektromotor angetrieben wird. Insbesondere zeichnet sich das Fahrzeug dadurch aus, dass die für den Elektromotor benötigte elektrische Energie zumindest teilweise mittels des Generatormoduls durch den Fahrer erzeugt wird.

Weitere Merkmale, Vorteile und Wirkung der Erfindung ergeben sich aus der nachfolgenden Beschreibung eines bevorzugten Ausführungsbeispiels der Erfindung sowie der beigefügten Figuren. Dabei zeigen:
- Figur 1: eine schematische Darstellung eines Fahrzeugs mit einer Antriebsanordnung als ein Ausführungsbeispiel der Erfindung;
- Figur 2: eine Schnittdarstellung eines Generatormoduls der Antriebsanordnung;
- Figur 3: eine dreidimensionale Darstellung der Getriebeeinrichtung in der Figur 2;
- Figur 4: eine axiale Draufsicht auf die Getriebeeinrichtung in der Figur 2 und 3;
- Figur 5: eine Schnittdarstellung einer alternativen Getriebeeinrichtung der Antriebsanordnung in der Figur 1.

Einander entsprechende oder gleiche Teile sind in den Figuren jeweils mit den gleichen Bezugszeichen versehen.

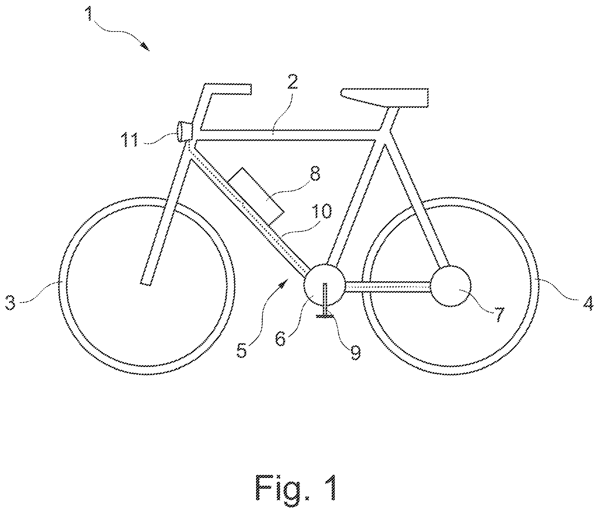

Figur 1 zeigt in einer stark vereinfachten Darstellung ein muskelkraftbetriebenes Fahrzeug 1. Das Fahrzeug 1 ist als ein Fahrrad ausgebildet, welches im Wesentlichen aus einem Rahmen 2 sowie einem Vorderrad 3 und einem Hinterrad 4 gebildet ist.

Das Fahrzeug 1 weist eine Antriebsanordnung 5 auf, welche zum Antriebs des Hinterrads 4 dient. Das Hinterrad 4 bildet somit ein Antriebsrad des Fahrzeugs 1, wobei das Vorderrad 3 antriebslos bleibt. Optional kann jedoch auch vorgesehen sein, dass das Vorderrad 3 angetrieben wird.

Die Antriebsanordnung 5 umfasst ein Generatormodul 6, optional ein Antriebsmodul 7 und ein Energiespeichermodul 8. Das Generatormodul 6 ist im Bereich des Tretlagers angeordnet und kann durch einen Fahrzeugbenutzer per Tretkraft angetrieben werden, um elektrische Energie für das Antriebsmodul 7 zu erzeugen. Das Generatormodul 6 weist hierzu zwei diametral zueinander angeordnete Tretkurbeln 9 auf, welche per Tretkraft in Rotation versetzt werden, um elektrische Leistung in dem Generatormodul 6 zu erzeugen.

Das Fahrrad weist keine mechanische Antriebsverbindung zwischen den Tretkurbeln 9 und dem Antriebsrad 4 auf. Das Generatormodul 6 ist lediglich über eine elektrische Leitung 10 mit dem Antriebsmodul 6 und/oder dem Energiespeichermodul 8 elektrisch verbunden, um die für das Antriebsmodul 7 nötige elektrische Energie bereitzustellen. Das Antriebsmodul 7 kann beispielsweise als ein in das Hinterrad 4 integrierter Radnabenmotor ausgebildet sein, welcher ein elektrisches Antriebsmoment auf das Hinterrad 4 überträgt. Das Antriebsmodul 7 kann dabei direkt durch die von dem Generatormodul 6 erzeugte elektrische Energie oder mittelbar durch die in dem Energiespeichermodul 8 gespeicherte elektrische Energie versorgt werden. Das Energiespeichermodul 8 kann während der Fahrt von Generatormodul 6 gespeist werden und darüber hinaus von einer externen Stromquelle geladen werden. Optional kann die vom Generatormodul 6 bereitgestellte elektrische Energie einem Verbraucher 11, z.B. Licht, zur Verfügung gestellt werden.

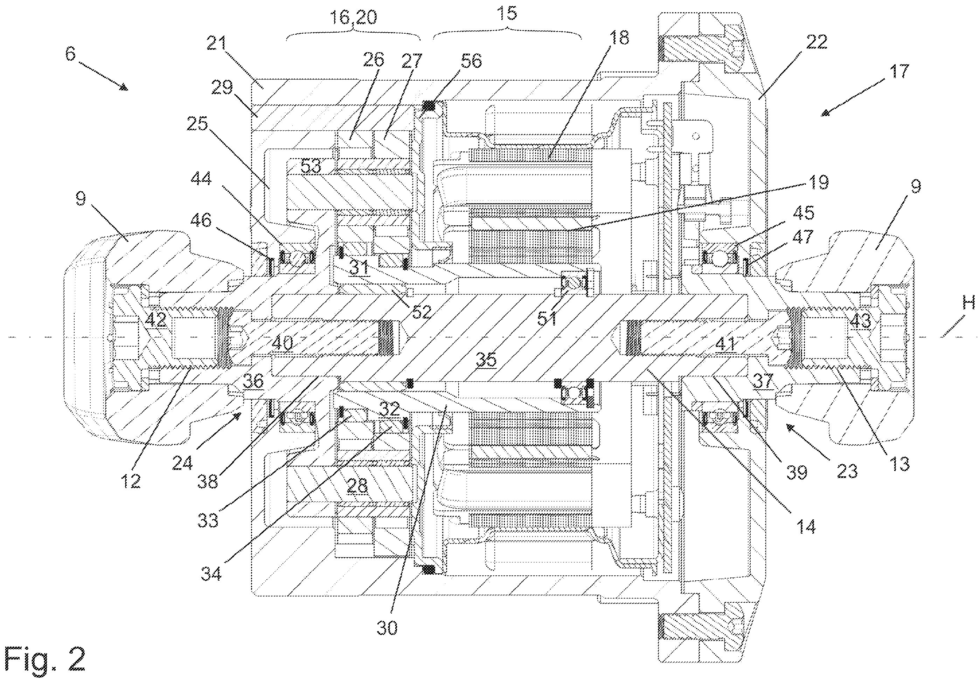

Die Figur 2 zeigt das Generatormodul 6 in einem Längsschnitt entlang einer Hauptdrehachse H. Das Generatormodul 6 weist eine Tretkurbelwelle 14 auf, welche mit ihrer Rotationsachse die Hauptdrehachse H definiert. In einer Einbausituation sind an der Tretkurbelwelle 14 endseitig die Tretkurbeln 9 montiert.

Das Generatormodul 6 weist einen Generator 15 sowie eine Getriebeeinrichtung 16, welche gemeinsam in einem Gehäuse 17 aufgenommen sind. Der Generator 15 weist einen Stator 18 und einen Rotor 19 auf, wobei die Tretkurbelwelle 14 mit einem Getriebeeingang und der Rotor 19 mit einem Getriebeausgang der Getriebeeinrichtung 16 verbunden sind. Der Stator 18 hingegen ist gehäusefest mit dem Gehäuse 17 verbunden und verbleibt somit stationär. Die Getriebeeinrichtung 16 dient dazu, ein in die Tretkurbelwelle 14 eingeleitetes Tretmoment über die Getriebeeinrichtung 16 auf den Generator 18 zu übersetzen.

Die Getriebeeinrichtung 16 ist als ein Exzentergetriebe 20 ausgebildet. Das Exzentergetriebe 20 ist in Bezug auf die Hauptdrehachse H koaxial zu dem Generator 15 und der Tretkurbelwelle 14 und in axialer Richtung formschlüssig zwischen dem Generator 15 und dem Gehäuse 17 angeordnet. Das Gehäuse 17 ist zweiteilig ausgebildet, wobei das Gehäuse 17 einen Gehäusegrundkörper 21 aufweist, welcher in axialer Richtung durch einen Gehäusedeckel 22 abgeschlossen ist. Dabei weisen der Gehäusegrundkörper 21 und der Gehäusedeckel 22 jeweils eine zentrale Durchgangsöffnung 23, 24 auf, welche zur Durchführung der Tretkurbelwelle 14 durch das Gehäuse 17 dienen.

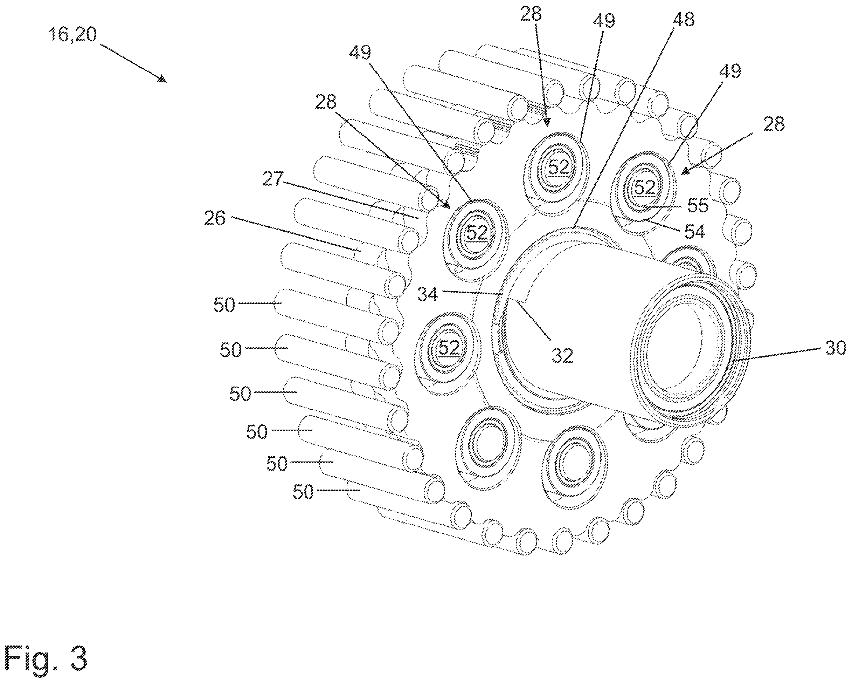

Das Exzentergetriebe 20 weist als Eingangsorgan einen Rollenträger 25 auf, welcher drehfest mit der Tretkurbelwelle 14 angeordnet ist. Ferner sind zwei Kurvenscheiben 26, 27 vorgesehen, wobei die Kurvenscheiben 26, 27 eine Exzenteraufnahmeöffnung 48 (Figur 3) und eine Mehrzahl von außermittigen Mitnehmeröffnungen 49 (Figur 3) aufweisen. Die Kurvenscheiben 26, 27 sind um gegengleich zueinander angeordnet, um Querkräfte im Betrieb zu verkleinern. Der Rollenträger 25 weist eine Mehrzahl von Mitnehmerrollen 28 auf, wobei die Mitnehmerrollen 28 in die Mitnehmeröffnungen 49 der Kurvenscheiben 26, 27 eingreifen, so dass diese in Umlaufrichtung von den Mitnehmerrollen 28 und damit von dem Rollenträger 26 mitgenommen werden.

Das Exzentergetriebe 20 weist einen Hohlradabschnitt 29 auf, wobei der Hohlradabschnitt 29 eine Mehrzahl von in axialer Richtung verlaufenden Bolzenabschnitten 50 aufweist. Die Bolzenabschnitte 50 sind als gehärtete Zylinderstifte ausgebildet, die in Bohrungen in dem Gehäuse 17 eingeschoben sind. Der Außenumfang der Kurvenscheiben 26, 27 ist in einer Wellenform ausgebildet, welche ausschließlich abschnittsweise und zwar um 180° versetzt in den Hohlradabschnitt 29 eingreift. Insbesondere ist die Wellenform als eine Zykloidenform ausgebildet.

Ein Ausgangsorgan des Exzentergetriebes 20 ist als eine Hohlwelle 30 ausgebildet, wobei die Hohlwelle 30 zwei Exzenterabschnitte 31, 32 aufweist, wobei die Exzenterabschnitte 31, 32 über jeweils eine Scheibenlagereinrichtung 33, 34 in die Exzenteraufnahmeöffnung der Kurvenscheiben 26, 27 eingreifen. Die Hohlwelle 30 ist drehfest mit dem Rotor 19 verbunden. Bei einer Rotation der Tretkurbelwelle 14 wird der Rollenträger 25 ebenfalls rotiert und die Drehbewegung ins Schnelle übersetzt. In einer bevorzugten Realisierung ist vorgesehen, dass das Exzentergetriebe 20 ein Übersetzungsverhältnis zwischen Getriebeeingang und Getriebeausgang mit einem Betrag von weniger als 1:30 aufweist. Vorzugsweise weist das Exzentergetriebe 20 ein Übersetzungsverhältnis zwischen 1:30 und 1:100 auf. Vorzugsweise weist das Exzentergetriebe 20 ein Übersetzungsverhältnis von 1:50 auf. Auf diese Weise wird das durch den Fahrer erzeugte hohe Tretmoment (im Bereich bis ca. 200 Nm) am Getriebeeingang/Eingangsorgan mit geringen Drehzahlen (im Bereich 30 bis 120 1/min) in ein geringeres Drehmoment mit hohen Drehzahlen am Getriebeausgang/Ausgangsorgan gewandelt.

Die Tretkurbelwelle 14 weist bei diesem Ausführungsbeispiel drei Teilkomponenten auf, nämlich einen zentralen Wellenabschnitt 35 sowie Wellenfortsätze 36, 37, welche endseitig auf den zentralen Wellenabschnitt 35 aufgesetzt sind. Der Wellenabschnitt 35 ist koaxial zu dem Rotor 19 und in dem gleichen axialen Abschnitt wie der Rotor 19 angeordnet. Insbesondere steht der Wellenabschnitt 35 beidseitig in axialer Richtung über den Rotor 19 über. Ein maximaler Außendurchmesser des Wellenabschnitts 35 ist dabei kleiner bemessen als der freie Innendurchmesser des Rotors 19 und/oder der Hohlwelle 30. Die Wellenfortsätze 36, 37 sind endseitig auf den Wellenabschnitt 35 aufgesetzt. Hierzu weisen die Wellenfortsätze 36, 37 Aufnahmen 38, 39 auf, in denen das jeweilige Ende des Wellenabschnitts 35 eingesteckt sind. Die Aufnahmen 38, 39 bilden jeweils gemeinsam mit den Enden des Wellenabschnitts 35 eine in Umlaufrichtung formschlüssige Welle-Nabe-Verbindung. Beispielsweise kann es sich um eine Polygonverbindung oder um eine Steckverzahnung handeln. Zur axialen Befestigung und/oder Sicherung der Wellenfortsätze 36, 37 sind erste Achsschrauben 40, 41 in den Wellenabschnitt 35 eingeschraubt, welche mit den Schraubköpfen die Wellenfortsätze 36, 37 in axialer Richtung fixieren. Damit weisen die Wellenfortsätze 36, 37 jeweils eine erste Schnittstelle zu dem Wellenabschnitt 35 auf.

Auf der axialen Außenseite der Wellenfortsätze 36, 37 sind die Tretkurbeln 9 aufgesetzt und über eine zweite Achsschraube 42, 43 befestigt, welche jeweils in ein Innengewinde 12, 13 von dem Wellenfortsatz 36, 37 eingeschraubt wird und mit dem Schraubenkopf jeweils die Tretkurbel 9 in axialer Richtung fixiert. Damit weisen die Wellenfortsätze 36, 37 jeweils eine zweite Schnittstelle zu der jeweiligen Tretkurbel 9 auf. Die erste und die zweite Achsschraube 40, 42 bzw. 41, 43 sind axial hintereinander angeordnet.

Durch die lösbare Verbindung zwischen den Wellenfortsätze 36, 37 und dem Wellenabschnitt 35 wird erreicht, dass die Wellenfortsätze 36, 37 einen größeren maximalen Außendurchmesser aufweisen können als der Wellenabschnitt 35 und trotzdem montagegerecht ausgebildet sind. Ein weiterer Vorteil ist, dass die erste und die zweite Schnittstelle belastungsgerecht ausgelegt werden können, ohne die Einschränkung eines maximalen Außendurchmessers berücksichtigen zu müssen, welcher bei der Montage durch den Rotor 19 durchgeschoben werden muss. Die erste und die zweite Schnittstelle sind axial versetzt zueinander angeordnet, so dass sich diese bei der Auslegung wechselseitig nicht beeinflussen.

Ein weiterer Vorteil ergibt sich dadurch, dass an dem Außenumfang der Wellenfortsätze 36, 37 weitere Funktionen umgesetzt werden können:
So weist das Generatormodul 6 Lagereinrichtungen 44, 45 auf, wobei die Lagereinrichtungen 44, 45 als Wälzlagereinrichtungen, insbesondere als Kugellagereinrichtung ausgebildet sind. Die Lagereinrichtungen 44, 45 lagern die Tretkurbelwelle 14 relativ zu dem Gehäuse 17 relativ zu einem Gehäuseabschnitt des Gehäuses 17. Dabei sind die Wellenfortsätze 36, 37 jeweils als Lagerpartner der Lagereinrichtungen 44, 45 ausgebildet und tragen jeweils einen Innenring der Lagereinrichtungen 44, 45 an deren Außenumfang. Der jeweilige Außenring ist in dem Gehäuse 17 angeordnet. Dadurch, dass der Außendurchmesser der Wellenfortsätze 36, 37 größer als der Außendurchmesser des Wellenabschnitts 35 ausgebildet ist, können im Durchmesser größere Lagereinrichtungen 44, 45 verwendet werden, so dass gemeinsam mit dem stabilen Verbund aus Wellenabschnitt 35 und Wellenfortsatz 36, 37 eine höhere Steifigkeit der Lagereinrichtungen 44, 45 erreicht werden können.

Zudem weist das Generatormodul 6 Dichtungseinrichtungen 46, 47 auf, die die Tretkurbelwelle 14 gegenüber dem Gehäuse 17 an den jeweiligen Durchgangsöffnungen 23, 24 abdichten. Die Dichtungseinrichtung in 46, 47 laufen auf den Wellenfortsätzen 36, 37. Die Wellenfortsätze 36, 37 bilden somit Dichtungspartner bei den Dichtungseinrichtungen 46, 47. Somit müssen keine Dichtungen innerhalb des Gehäuses 17 eingebracht werden.

Bei dem Generatormodul 6 ist zudem vorgesehen, dass der Rollenträger 25 des Exzentergetriebes 20 als Getriebeeingang/Eingangsorgan mit dem Wellenfortsatz 36 einteilig ausgebildet ist. Somit übernimmt der Wellenfortsatz 36 eine weitere Funktion. Hieraus ergibt sich insbesondere der Vorteil, dass eine Welle-Nabe-Verbindung zwischen der Tretkurbelwelle 14 und der Getriebeeinrichtung 16 eingespart werden kann.

Eine übliche Tretkurbelwelle, wie diese bei konventionellen Fahrrädern bekannt ist, kann nicht beidseitig größer im Durchmesser gestaltet werden (z.B. zur stabilen Aufnahme von Tretkurbeln mit z.B. ISIS-Verzahnung), da so zentral angeordnete Bauteile nicht mehr aufgesteckt werden können. Würden diese Bauteile daher größer im Durchmesser gestaltet werden, so würde der Gesamt-Außendurchmesser des Moduls ebenfalls (unnötig) wachsen, was Bauraum, Kosten und Masse erhöht.

Wird zur Aufnahme der Tretkurbeln z.B. eine entsprechende DIN-Verzahnung gewählt, welche mit einem kleineren Durchmesser auskommt, so dass alle Bauteile von den Wellenenden her aufgesteckt werden können, so müssen eigens dafür gefertigte Tretkurbeln Verwendung finden, was die Auswahl an Kurbellängen, Designs, Kurbel-Offset (Q-Faktor/"Standbreite") wegen der geringen Stückzahl stark einschränkt oder teuer macht.

Werden statt der speziellen Tretkurbeln lediglich Kurbeladapter auf die durchgehende Tretkurbelwelle aufgesteckt um Standard-Kurbeln (z.B. ISIS) verwenden zu können, so können diese nur mit einer geringen Wandstärke ausgeführt werden was zu Stabilitätseinbußen führt und aufgrund der zusätzlich nötigen Wellenverbindung höhere Kosten verursacht.

Um eine stabile Tretkurbelwelle 14 darstellen zu können, welche in ihrer (axialen) Mitte einen geringen Durchmesser, an den Enden jedoch jeweils einen größeren Durchmesser aufweist, wird folglich vorgeschlagen, die Tretkurbelwelle 14 mehrteilig (z.B. zweiteilig oder dreiteilig) aus zu führen.

Der Zusammenbau besteht (im Fall einer dreiteiligen Ausführung wie in der Figur 2) aus dem Wellenabschnitt 35 als Zentralwelle mit geringem Durchmesser, welche an ihren Enden über jeweils eine Wellenverbindung verfügt. Diese kann in Form einer Steckverzahnung oder in Form einer P3G Polygon-Verbindung ausgeführt sein. Auf diese Wellenverbindung wird jeweils ein Wellenfortsatz 36, 37 gesteckt und vorzugsweise mit dem Wellenabschnitt 35 mittels erster Achsschraube 40, 41 axial fest verschraubt. Die Lagerung der Tretkurbelwelle 14 erfolgt über den oder die Wellenfortsätze 36, 37 und nicht über den Wellenabschnitt 35, um so einen stabilen Verbund darstellen und - zugunsten der Steifigkeit - größere Lagereinrichtungen 44, 45 verwenden zu können. Auch die Dichtungseinrichtungen 46, 47 als Gehäuse- bzw. -deckeldichtungen werden auf den Wellenfortsätzen 36, 37 laufend vorgesehen, so dass keine Dichtung innerhalb des Gehäuses 17 erforderlich ist.

Durch die einteilig (nicht radial geschachtelt wie bei aufgesteckten Adaptern) aus dem Generatormodul 6 herausgeführten Wellenenden ausgebildet als die Wellenfortsätze 36, 37 der Tretkurbelwelle 14 ist es auch möglich, standardisierte ISIS Kurbelschrauben als zweite Achsschrauben 42, 43 einsetzen zu können, welches bei aufgesteckten Adaptern nicht möglich wäre, da zu geringe radial Bauteilwandstärken verbleiben würden. Es kann auch der von der Antriebswelle angetriebene Getriebeeingang/Eingangsorgan einteilig mit dem betreffenden Wellenfortsatz 36, 37 ausgeführt sein. Hierdurch wird eine ansonsten weitere, erforderliche drehmomentübertragende Verbindung (z.B. Steckverzahnung) zwischen dem Wellenfortsatz 36 und dem den Getriebeeingang/Eingangsorgan darstellenden Bauteil eingespart (Kosten, Bauraum, Masse).

Da das Aufstecken von weiteren Bauteilen (Getriebeteile/-lager usw.) auf die Tretkurbelwelle 14 bei der Montage ggf. nur von einer Seite her erfolgen kann/muss, kann die Tretkurbelwelle 14 alternativ auch lediglich zweiteilig ausgeführt sein. Dabei sind dann der Wellenabschnitt 35 und einer der beiden Wellenfortsätze 36, 37 gemeinsam einteilig ausgeführt. Vorzugsweise erfolgt dies auf der Seite des Generatormoduls 6, auf welcher sich nicht die Getriebeeinrichtung 16 befindet, so dass auf der Getriebeseite der Wellenfortsatz 36 und der Getriebeeingang/Eingangsorgan einteilig ausgeführt werden können. Die Tretkurbelwelle 14 ist relativ zu der Hohlwelle 30 und/oder zu dem Rotor 19 über eine Rotorlagereinrichtung 51 gelagert, die im Endbereich des Rotors 19 angeordnet und als eine Wälzkörperlagerung ausgebildet ist. Ferner ist die Tretkurbelwelle 14 über eine Rollenlagereinrichtung 52 im Bereich der Getriebeeinrichtung 16 gegen die Hohlwelle 30 und/oder den Exzenterabschnitten 31, 32 gelagert.

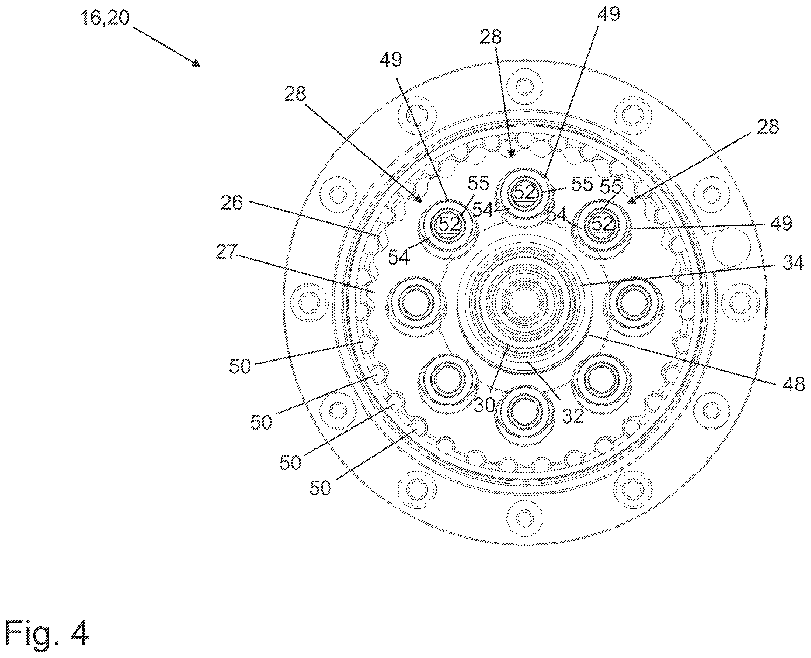

Die Figur 3 zeigt eine schematische, dreidimensionale Darstellung der Getriebeeinrichtung 16 bzw. des Exzentergetriebes 20, ausgebildet als Zykloidengetriebe. In Zusammenschau mit den Darstellungen der Figur 2 und Figur 4, die eine axiale Draufsicht auf die gleiche Baugruppe zeigt ist, zu erkennen, dass die Mitnehmerrollen 28 jeweils einen Bolzen 52 aufweisen, wobei der Bolzen 52 in einer Rollenscheibe 53 des Rollenträgers 25 festgelegt, z.B. eingepresst sind. Auf den Bolzen 52 ist jeweils eine Rollenhülse 54 koaxial aufgesetzt, wobei die Rollenhülse 54 auf dem Bolzen über eine Rollenlagerung 55 gelagert ist. Die Rollenlagerung 55 ist als eine Gleitlagerung oder als eine Wälzkörperlagerung ausgebildet. Der Außendurchmesser der Mitnehmerrollen 28 und/oder der Rollenhülsen 54 ist größer als die Mitnehmeröffnungen 54 ausgebildet, so dass die Rollenhülsen 54 am Innenumfang der Mitnehmeröffnungen 54 ablaufen können. Die Rollenscheibe 53 ist einteilig mit dem Wellenfortsatz 36 ausgebildet, so dass hier eine Welle-Nabe-Verbindung eingespart ist.

Zur weiteren Verkleinerung der Reibungsverluste in dem Generatormodul 6, insbesondere in der Getriebeeinrichtung 16 und im Speziellen in dem Exzentergetriebe 20 ist der Getrieberaum mit einer Öl- oder Fettschmierung versehen, wobei der Getrieberaum durch eine Zwischenwand 56 und einer Dichtung 57 relativ zu der Hohlwelle 30 von einem Trockenraum für den Generator und die Elektronik getrennt ist.

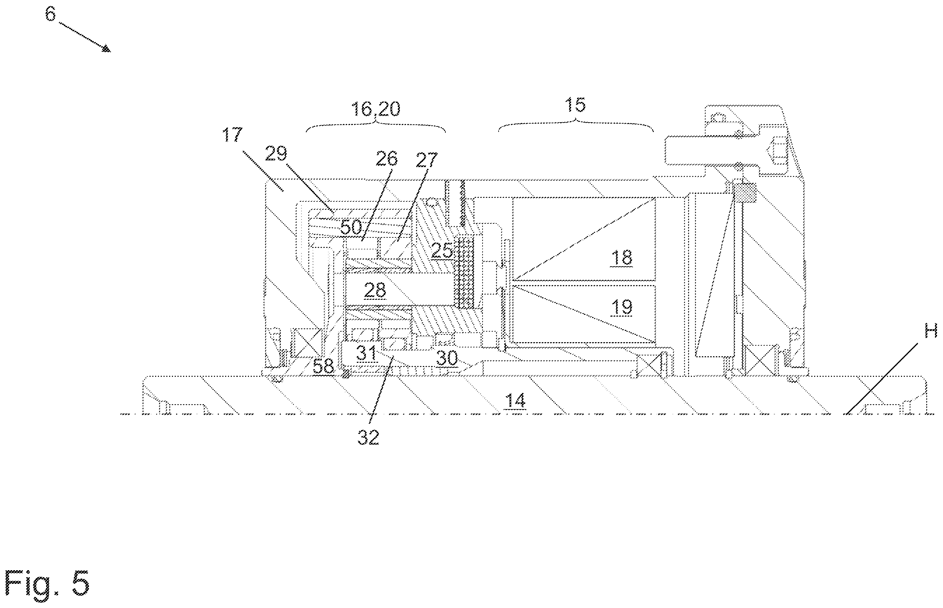

Die Figur 5 zeigt ein zweites Ausführungsbeispiel für das Generatormodul 6 in der Antriebsanordnung 5 der Figur 1. In der Figur 5 ist ein Längsschnitt entlang der Hauptdrehachse H gezeigt, wobei nachfolgend nur auf die Unterschiede zu dem Generatormodul 6 in der Figur 2 eingegangen wird. Im Gegensatz zu dem Generatormodul 6 in der Figur 2 bildet hier der Hohlradabschnitt 29 das Eingangsorgan und/oder den Getriebeeingang in die Getriebeeinrichtung 16 bzw. das Exzentergetriebe 20. Der Hohlradabschnitt 29 kann in ähnlicher Weise wie in der Figur 2 durch eine Mehrzahl in Umlaufrichtung angeordneten Bolzenabschnitten 50, ausgebildet als insbesondere gehärtete Zylinderstifte realisiert sein. In dem dargestellten Ausführungsbeispiel weist der Hohlradabschnitt 29 einen Träger 58 auf, wobei der Träger 58 auf der Tretkurbelwelle 14 drehfest angeordnet ist. Es ist jedoch auch möglich, dass der Träger 58 mit einem Wellenfortsatz, wie der Wellenfortsatz 36 in der Figur 2 einteilig ausgebildet ist. Ferner kann die Tretkurbelwelle 14 auch zwei- oder mehrteilig ausgebildet sein, wie in der Figur 2.

### Bezugszeichenliste

- 1: Fahrzeug
- 2: Rahmen
- 3: Vorderrad
- 4: Hinterrad
- 5: Antriebsanordnung
- 6: Generatormodul
- 7: Antriebsmodul
- 8: Energiespeichermodul
- 9: Tretkurbel
- 10: Leitung
- 11: Verbraucher
- 12: Innengewinde
- 13: Innengewinde
- 14: Tretkurbelwelle
- 15: Generator
- 16: Getriebeeinrichtung
- 17: Gehäuse
- 18: Stator
- 19: Rotor
- 20: Exzentergetriebe
- 21: Gehäusegrundkörper
- 22: Gehäusedeckel
- 23: Durchgangsöffnung im Gehäusedeckel
- 24: Durchgangsöffnung im Gehäusegrundkörper
- 25: Rollenträger
- 26, 27: Kurvenscheiben
- 28: Mitnehmerrollen
- 29: Hohlradabschnitt
- 30: Hohlwelle
- 31, 32: Exzenterabschnitte
- 33, 34: Scheibenlagereinrichtung
- 35: Wellenabschnitt
- 36, 37: Wellenfortsätze
- 38, 39: Aufnahmen
- 40, 41: erste Achsschraube
- 42, 43: zweite Achsschraube
- 44, 45: Lagereinrichtungen
- 46,47: Dichtungseinrichtungen
- 48: Exzenteraufnahmeöffnung
- 49: Mitnehmeröffnungen
- 50: Bolzenabschnitte
- 51: Rotorlagereinrichtung
- 52: Bolzen
- 53: Rollenscheibe
- 54: Rollenhülse
- 55: Rollenlagerung
- 56: Zwischenwand
- 57: Dichtung
- 58: Träger
- H: Hauptdrehachse

## Patentansprüche

1. Antriebsanordnung (5) für ein muskelbetriebenes Fahrzeug (1)
mit einem Generatormodul (6) zur Erzeugung elektrischer Energie für ein Antriebsmodul (7) zur Erzeugung eines elektrischen Antriebsmoments, wobei das Generatormodul (6) einen Generator (15) aufweist, der durch einen Fahrzeugbenutzer per Tretkraft antreibbar ist,
wobei das Generatormodul (6) eine Tretkurbelwelle (14) zur Übertragung der Tretkraft von einer Tretkurbel (9) auf den Generator (15) aufweist,
wobei das Generatormodul (6) eine Getriebeeinrichtung (16) zur Übersetzung der Tretkraft auf den Generator (15) aufweist, wobei die Tretkurbelwelle (14) über die Getriebeeinrichtung (16) getriebetechnisch mit dem Generator (15) verbunden ist und die Getriebeeinrichtung (15) als ein Exzentergetriebe (20) ausgebildet ist,
wobei
das Exzentergetriebe
einen Rollenträger (25) mit Mitnehmerrollen (28) als ein erstes Organ, mindestens eine Kurvenscheibe (26,27) mit Mitnehmeröffnungen (49) und einer mittigen Exzenteraufnahmeöffnung (48), wobei die Mitnehmerrollen (28) in die Mitnehmeröffnungen (49) eingreifen,
einen Hohlradabschnitt (29) als ein zweites Organ, wobei die Kurvenscheibe (26,27) mit dem Außenumfang auf dem Hohlradabschnitt (29) abläuft, sowie
eine Exzenterwelle als Ausgangsorgan aufweist, wobei die Exzenterwelle mindestens einen Exzenterabschnitt (31,32) aufweist, wobei der Exzenterabschnitt (31,32) in die mittige Exzenteraufnahmeöffnung (48) eingreift,
der Rollenträger (25) das Eingangsorgan der Getriebeeinrichtung (16) bildet, **dadurch gekennzeichnet, dass**
die Tretkurbelwelle (14) einen Wellenabschnitt (35) und einen Wellenfortsatz (36) zur Verbindung mit der Tretkurbel (9) aufweist, wobei der Wellenabschnitt (35) und der Wellenfortsatz (36) miteinander lösbar verbunden sind und der Wellenfortsatz (36) mit dem Eingangsorgan einteilig ausgebildet ist.

2. Antriebsanordnung (5) nach Anspruch 1, **dadurch gekennzeichnet, dass** die Mitnehmerrollen (28) jeweils einen Bolzen (52), eine Rollenlagerung (55) und eine Rollenhülse (54) aufweise wobei die Rollenhülse (54) über die Rollenlagerung (55) auf den Bolzen (52) drehbar angeordnet sind und wobei die Bolzen (52) in dem Rollenträger (25) festgelegt sind.

3. Antriebsanordnung (5) nach einem der vorhergehenden Ansprüche 1 oder 2, **dadurch gekennzeichnet, dass** das Exzentergetriebe (16) zwei diametral und/oder gegengleich versetzte Kurvenscheiben (26,27) aufweist.

4. Antriebsanordnung (5) nach einem der vorhergehenden Ansprüche 2 bis 3, **dadurch gekennzeichnet, dass** der Hohlradabschnitt (29) durch eine Mehrzahl von Bolzenabschnitten (50) gebildet wird, wobei die mindestens eine Kurvenscheibe (26,27) auf den Bolzenabschnitten (50) ablaufen.

5. Antriebsanordnung (5) nach einem der vorhergehenden Ansprüche 2 bis 4, **dadurch gekennzeichnet, dass** der Hohlradabschnitt (29) das Eingangsorgan in die Getriebeeinrichtung (20) bildet.

6. Antriebsanordnung (5) nach einem der vorhergehenden Ansprüche, **gekennzeichnet durch** das Antriebsmodul (7) und ein Energiespeichermodul (8), wobei das Generatormodul (6) zur Bereitstellung der elektrischen Energie über eine elektrische Leitung (10) unmittelbar mit dem Antriebsmodul (7) oder mittelbar über ein Energiespeichermodul (8) mit dem Antriebsmodul (7) verbunden ist.

7. Fahrzeug (1) mit einer Antriebsanordnung (5) nach einem der vorhergehenden Ansprüche.

## Claims

1. A drive assembly (5) for a human-powered vehicle (1) having a generator module (6) for generating electrical energy for a drive module (7) for generating an electric drive torque, wherein the generator module (6) has a generator (15) that can be driven by a vehicle user by pedal force,
wherein the generator module (6) has a pedal crankshaft (14) for transmitting the pedal force from a pedal crank (9) to the generator (15),
wherein the generator module (6) has a gearbox device (16) for transmitting the pedal force to the generator (15), wherein the pedal crankshaft (14) is mechanically connected to the generator (15) via the gearbox device (16) and the gearbox device (15) is designed as an eccentric gearbox (20),
wherein
the eccentric gearbox has
a roller carrier (25) with drive rollers (28) as a first element, at least one cam disc (26, 27) with drive openings (49) and a central eccentric receiving opening (48), wherein the drive rollers (28) engage in the drive openings (49),
a ring gear section (29) as a second element, wherein the cam disc (26, 27) runs with its outer circumference on the ring gear section (29), and
an eccentric shaft as the output element, wherein the eccentric shaft has at least one eccentric section (31, 32), wherein the eccentric section (31, 32) engages in the central eccentric receiving opening (48), the roller carrier (25) forms the input element of the gearbox device (16), **characterised in that**
the pedal crankshaft (14) has a shaft section (35) and a shaft extension (36) for connecting with the pedal crank (9), wherein the shaft section (35) and the shaft extension (36) are detachably connected to each other and the shaft extension (36) is formed in one piece with the input element.

2. The drive assembly (5) according to claim 1, **characterized in that** the drive rollers (28) each have a bolt (52), a roller bearing (55) and a roller sleeve (54), wherein the roller sleeve (54) is rotatably arranged on the bolt (52) via the roller bearing (55) and wherein the bolts (52) are fixed in the roller carrier (25).

3. The drive assembly (5) according to either one of the preceding claims 1 or 2, **characterised in that** the eccentric gearbox (16) has two diametrically and/or oppositely offset cam discs (26, 27).

4. The drive assembly (5) according to either one of the preceding claims 2 to 3, **characterised in that** the ring gear section (29) is formed by a plurality of bolt sections (50), wherein the at least one cam disc (26,27) runs on the bolt sections (50).

5. The drive assembly (5) according to any one of the preceding claims 2 to 4, **characterised in that** the ring gear section (29) forms the input element into the gearbox device (20).

6. The drive assembly (5) according to any one of the preceding claims, **characterised by** the drive module (7) and an energy storage module (8), wherein the generator module (6) for providing electrical energy is connected directly to the drive module (7) via an electrical line (10) or indirectly to the drive module (7) via an energy storage module (8).

7. A vehicle (1) having a drive assembly (5) according to any one of the preceding claims.

## Revendications

1. Ensemble d'entraînement (5) pour un véhicule à propulsion musculaire (1) comportant un module générateur (6) destiné à produire de l'énergie électrique pour un module d'entraînement (7) afin de produire un couple d'entraînement électrique, le module générateur (6) présentant un générateur (15) qui peut être entraîné par la force de pédalage d'un utilisateur de véhicule,
le module générateur (6) présentant un axe de pédalier (14) destiné à transmettre la force de pédalage d'une pédale (9) au générateur (15),
le module générateur (6) présentant un dispositif de transmission (16) destiné à transmettre la force de pédalage au générateur (15), l'axe de pédalier (14) étant relié au générateur (15) par la technique de transmission du dispositif de transmission (16) et le dispositif de transmission (15) étant réalisé comme une transmission à excentrique (20),
dans lequel
la transmission à excentrique présente
un support à rouleaux (25) comportant des rouleaux d'entraînement (28) comme premier organe, au moins une came (26, 27) comportant des ouvertures d'entraînement (49) et une ouverture centrale de réception d'excentrique (48), les rouleaux d'entraînement (28) venant en prise dans les ouvertures d'entraînement (49),
une section de couronne dentée (29) comme second organe, la came (26, 27) se déplaçant avec sa circonférence extérieure sur la section de couronne dentée (29), ainsi que
un arbre excentrique comme organe de sortie, l'arbre excentrique présentant au moins une section excentrique (31, 32), la section excentrique (31, 32) venant en prise dans l'ouverture centrale de réception d'excentrique (48), le support de rouleaux (25) formant l'organe d'entrée du dispositif de transmission (16), **caractérisé en ce que**
l'axe de pédalier (14) présente une section d'arbre (35) et un prolongement d'arbre (36) destiné à être relié à la pédale (9), la section d'arbre (35) et le prolongement d'arbre (36) étant reliés entre eux de manière amovible et le prolongement d'arbre (36) étant réalisé d'un seul tenant avec l'organe d'entrée.

2. Ensemble d'entraînement (5) selon la revendication 1, **caractérisé en ce que** les rouleaux d'entraînement (28) présentent respectivement un boulon (52), un palier à rouleaux (55) et un manchon à rouleaux (54), le manchon à rouleaux (54) étant agencé en rotation sur le boulon (52) par l'intermédiaire du palier à rouleaux (55) et les boulons (52) étant fixés dans le support à rouleaux (25).

3. Ensemble d'entraînement (5) selon l'une quelconque des revendications précédentes 1 ou 2, **caractérisé en ce que** la transmission à excentrique (16) présente deux cames (26, 27) décalées diamétralement et/ou en opposition.

4. Ensemble d'entraînement (5) selon l'une quelconque des revendications précédentes 2 à 3, **caractérisé en ce que** la section de couronne dentée (29) est formée par une pluralité de sections de boulons (50), l'au moins une came (26, 27) se déplaçant sur les sections de boulons (50).

5. Ensemble d'entraînement (5) selon l'une quelconque des revendications précédentes 2 à 4, **caractérisé en ce que** la section de couronne dentée (29) forme l'organe d'entrée dans le dispositif de transmission (20).

6. Ensemble d'entraînement (5) selon l'une quelconque des revendications précédentes, **caractérisé par** le module d'entraînement (7) et un module de stockage d'énergie (8), le module générateur (6), pour fournir l'énergie électrique, étant relié directement au module d'entraînement (7) par l'intermédiaire d'un câble électrique (10) ou étant relié indirectement au module d'entraînement (7) par l'intermédiaire d'un module de stockage d'énergie (8).

7. Véhicule (1) comportant un ensemble d'entraînement (5) selon l'une quelconque des revendications précédentes.
